# EUROPÄISCHE PATENTSCHRIFT

(11) **EP 0 958 515 B1**
(45) Veröffentlichungstag und Bekanntmachung des Hinweises auf die Patenterteilung: **04.12.2002**
(21) Anmeldenummer: 98909325.7
(22) Anmeldetag: 03.02.1998
(51) Int. Cl.: G02B 5/32, G03H 1/32, G03B 21/62

(54) **HOLOGRAFISCHER BILDSCHIRM MIT INTEGRIERTER SPECKLEUNTERDRÜCKUNG**
HOLOGRAPHIC DISPLAY SCREEN WITH INTEGRATED SPECKLE SUPPRESSION
ECRAN D'AFFICHAGE HOLOGRAPHIQUE AVEC SUPPRESSION DU CHATOIEMENT INTEGREE

(30) Priorität: 07.02.1997 DE 19704741
(43) Veröffentlichungstag der Anmeldung: 24.11.1999
(73) Patentinhaber: EADS Deutschland GmbH, 81663 München (DE)
(72) Erfinder: HALLDORSSON, Thorsteinn, D-81927 München (DE)
(86) Internationale Anmeldenummer: DE9800302
(87) Internationale Veröffentlichungsnummer: WO98035246

(56) Entgegenhaltungen:
- DE-A- 2 003 024
- GOLBACH H: "Reduction of speckle in holographic reflected-light microscopy" OPTIK, 1973, WEST GERMANY, Bd. 37, Nr. 1, ISSN 0030-4026, Seiten 45-49, XP002068299
- ANONYMOUS: "Reduction of Holographic Image Granularity. May 1970." IBM TECHNICAL DISCLOSURE BULLETIN, Bd. 12, Nr. 12, NEW YORK, US, Seiten 2297-2298, XP002068300
- HUIGNARD J P ET AL: "Speckle-free imaging in four-wave mixing experiments with Bi/sub 12/SiO/sub 20/ crystals" OPTICS LETTERS, OCT. 1980, USA, Bd. 5, Nr. 10, ISSN 0146-9592, Seiten 436-437, XP002068301
- MEHTA P C ET AL: "Frequency-modulated zone plate for coherent noise reduction" APPLIED OPTICS, 15 JULY 1979, USA, Bd. 18, Nr. 14, ISSN 0003-6935, Seiten 2394-2397, XP002068302
- CAULFIELD: "Handbook of OPtical Holography", 1979, ACADEMIC PRESS, NEW YORK
- MARTIENSSEN: "Holographic reconstruction without Granulation", PHYSICS LETTERS, , 16. Januar 1967, Band 24A, Nr. 2, Seiten 126 - 127

## Beschreibung

Die Erfindung betrifft die Herstellung eines holografischen Bildschirms, der bei der Aufnahme so ausgelegt wird, daß bei seiner Beleuchtung mit schmalbandigem Laserlicht Bildspeckles nur im geringen Maße auftreten.

Bei der Verwendung von Lasern zur Beleuchtung oder Bilddarstellung auf einer Projektionsfläche treten aufgrund der Rauhigkeit der Fläche und damit verbundenen Laufzeitunterschiede der von verschiedenen Teilen der Fläche ausgehenden Wellen im Raume vor der Fläche Interferenzen auf. Im Auge des Betrachters führen die Interferenzen zu einer starken zusätzlichen Intensitätsmodulation der Helligkeitsverteilung des Schirmes, die wie ein feines Granulationsmuster das Bild überzieht. Dies gilt sowohl für Schirme für die Aufprojektion d.h. für Betrachtung des Bildes an dem von dem Schirm rückgestreuten Lichtes, als auch in Rückprojektion, d.h. bei der Bildbetrachtung in der Transmission eines auf die Rückseite des Schirms aufprojezierten Bildes. Die Größe der Bildspeckles und der Grad der Intensitätsdurchmodulation hängt von der Feinheit der Oberflächenrauhigkeit bzw. Dichte von Streuzentren in einem volumenstreuenden Schirm und dem Betrachtungsabstand und -Winkel zum Schirm ab. Bei grobstrukturierten Oberflächen entstehen kleine, bei feinstrukturierten Flächen große Speckles. Bei spiegelndenen Flächen mit Oberflächenrauhigkeiten weit unter der Wellenlänge des Lichtes sind die Speckles so groß, daß sie nicht mehr als solche vom Auge aufgelöst werden.

Das Bildrauschen durch die Speckles, was die statistisch verteilten Oberflächenrauhigkeiten wiederspiegelt, reduziert die wahrnehmbare geometrische Bildauflösung des Auges bis zu einem Faktor von 10. Außer der gravierenden Bildverschlechterung durch die Speckles treten bei Farbprojektionen mit der Überlagerung von einander unabhängigen statistischen Intensitätsverteilungen der Grundfarben rot, grün und blau Farbstörungen in der Form von Farbszintillationen, Regenbogeneffekten, Farbsäumen usw. auf.

Die Laserspeckles, deren Grund in der schmalen Linienbreite der Laseremission liegt, sind ein grundsätzliches Problem der Bildwiedergabe mit Lasern. Daß dieses Problem seit der ersten Einführung von Laserbildprojektoren Anfang der Siebziger Jahre bis heute nicht technisch-wirtschaftlich gelöst werden konnte, ist es einer der Hauptgründe für die geringe Verbreiterung dieser Technik für Beleuchtungszwecke und flächenhafte Bilddarstellung.
Grundsätzlich sind Laser für die helle Bildwiedergabe wegen ihrer hohen Strahldichte vor allem für Großbilddarstellung besonders geeignet. Dieser Vorteil alleine aber genügt nicht, um bei einer hellen Umgebung wie in Arbeitsräumen oder bei Tageslicht wegen der störenden Überlagerung der Grundhelligkeit des Raumes hochqualititative Bilder zu generieren. Erst durch die Schaffung eines dunklen Schirmes als holografisches Abbild eines reellen Schirmes, der selektiv Laserlicht aus dem Schirm herausstreut, aber breitbandiges Umgebungslicht absorbiert, ist es speziell durch die Verwendung von Laserlicht gelungen eine kontrastreiche Bildprojektion in heller Umgebung herzustellen, wie in den älteren deutschen Patentanmeldungen 197 00 162.9 und 197 03 592.2 beschrieben worden ist.

Dabei wird der weiße streuende Schirm in den Grundfarben dreier Laserstrahlen rot, grün und blau entweder in einer einzigen Photoschicht, in drei Schichten aufeinander oder in lateraler Anordnung in Punkttripels eines Hologramms einbelichtet.

Bei der Bildwiedergabe wird das Hologramm mit dem Laserprojektor je nach Abbildungsverfahren mit einem modulierten Laserstrahl punktuell, zeilenförmig abgescannt oder in einem aufgeweiteten Strahl eines Lichtventilprojektors flächenhaft beleuchtet. Das Hologramm streut dann das Licht des Projektionsstrahls in Richtung zum Betrachter wie der reelle Objektschirm, jedoch mit dem Unterschied, daß das Hologramm das störende breitbandige Umgebungslicht durchläßt, wo es dann absorbiert werden kann.

Wie allgemein bekannt, treten Speckles auch bei der Aufnahme und Bildwiedergabe von Hologrammen mit Lasern auf; d.h. bei holografischen Schirm muß auch das Speckleproblem wie am Objektschirm bekämpft werden. Die Methoden, die sich am Objektschirm zur Speckleminderung bewährt haben, können aber hier übertragen und durch die zusätzlichen Eigenschaften des Hologramms verbessert werden.

Eine der Möglichkeiten der Specklereduzierung ist die Verwendung von Schirmen mit besonders fein strukturierten Oberflächenbelag bzw. einer dickeren Oberflächenschicht, in der sehr dichte Streuzentren wie in Keramik- oder Teflonplatten eingelagert sind. In diesem Fall entstehen besonders große Speckles, die vom Auge schlechter aufgelöst werden und damit nicht so störend empfunden werden.

Eine zweite Methode ist die Verwendung von relativ breitbandigen Laserlichtquellen bei der Projektion (Wiedergabe), z.B. Lasern mit sehr vielen longitudinalen oder transversalen Moden wie Halbleiterlaserdioden oder Glasfaserlasern mit einigen zehn Moden über einen Wellenlängenbereich von mehreren Nanometern. In diesem Falle entsteht bei jeder schmalen Lasermode ein eigenständiges Specklefeld, wobei die Specklefelder verschiedener Moden wegen ihrer ungleichen Wellenlänge im Raume unterschiedlich verteilt sind. Da die Wellen der benachbarten Moden in ihrer Phase sehr schnell auseinanderlaufen, interferieren die Wellen nicht miteinander. Das resultierende Specklefeld ist eine unkorrelierte Summation der Intensitäten der einzelnen Specklefelder mit einer Reduktion der Specklemodulation um einen Faktor √N, mit N als Anzahl der Moden.

Dieser Vorteil ist auch bei der Wiedergabe von Hologrammen bekannt. Transmissionshologramme, die mit Lasern aufgenommen worden sind, können z.B. specklefrei mit spektral gefilterten Quecksilberlampen wiedergegeben werden; Reflexionsvolumenhologramm sogar mit Halogenlampen. Dies beruht auf der Tatsache, daß des Wiedergabelicht aus einer hohen Anzahl dicht liegender Spektrallinien (Kontinium) über einige Nanometer besteht, dessen Specklebilder sich wie oben ausmitteln.

Eine dritte Möglichkeit zur Reduktion der Specklemodulation im Auge besteht nun darin, das Specklefeld in Bewegung zu setzen. Durch die Trägheit des Auges mittelt es nun über die zeitlich variable Intensitätsmodulation des Specklefeldes. Diese Bewegung des Specklefeld kann durch eine Bewegung des Schirmes, die Scanbewegung des Projektionsstrahles über den Schirm oder eine interne Bewegung von Teilstrahlen innerhalb des Projektionsstrahles bewerkstelligt werden.

Als vierte Möglichkeit bietet sich die Kombination von zwei oder allen drei hier aufgezählten Methoden an.

Der Erfindung liegt die Aufgabe zugrunde, ein Verfahren zur Aufnahme eines holografischen Schirms anzugeben, der aus einem mit Lasern aufgenommenen und mit einem Laser beleuchteten Hologramm ein "specklefreies" Bild erzeugt. Je nach Anwendung kann der Objektschirm als Reflexions- oder Transmissionshologramm aufgenommen sein.

Der Erfindung liegen zwei bekannte Eigenschaften von Hologrammen zugrunde, nämlich zum ersten, daß grundsätzlich mehrere Bilder eines Gegenstandes als überlagerte Beugungsgitterstrukturen im gleichen Hologramm gespeichert und als getrennte Bilder wiedergegeben werden können. Die zweite Eigenschaft besteht darin, daß eine Wiedergabe des Bildes mit einer veränderten Wellenlänge mit einer Bildgrößenveränderung im Verhältnis der beiden Wellenlängen ohne Qualitätsverlust möglich ist.

Die Aufgabe der Erfindung ist es, die erstere der beiden Eigenschaften des Hologramms zu nutzen um das Specklerauschen eines Objektschirmes nachträglich im Hologramm weiter zu unterdrücken.

Die erste Eigenschaft wird genutzt, um aus einem geeigneten Objektschirm, z.B. mit sehr feiner Oberflächenrauhigkeit oder Volumenstreuung mehrere Schirmbilder in dem Hologramm aufeinander zu überlagern. Durch das Verrücken des Schirmes von einer Aufnahme zur anderen in irgendeine Richtung oder um beliebige Achse, bzw. durch Schwenken der Objektbeleuchtungs- oder des Referenzstrahles des Hologramms können die Bilder so aufeinandergelegt werden, daß ihre Feinstrukturen sich in unkorrelierter Weise addieren. Dazu genügt eine Ortsveränderung des Schirmes in der Größenordnung von Bruchteilen der mittleren Strukturgröße, die im Bereich von einigen µm bis zehn um liegt. Auch können mehrere Schirme in unterschiedlicher Tiefe als virtuelle Volumenstreuer aufeinandergestapelt werden. Die Feinheit eines solchen Musters könnte z.B. bis λ/10 betragen.

Wird in einer Weiterbildung der Erfindung ein Bild eines Bildschirmes mit seinen Streueigenschaften in Rück- oder Vorwärtsstreuung mit einer festen Wellenlänge und nochmal mit einer zweiten zu der ersten verschobenen Wellenlänge aufgenommen, entstehen im Hologramm zwei Gitterstrukturen mit unterschiedlicher Gitterkonstante. Wird bei der Wiedergabe ein Beleuchtungsstrahl mit nur einer der Wellenlängen verwendet, entstehen zwei überlagerte Bilder in unterschiedlicher Größe im Verhältnis der Wellenlängen.

Da es sich um die Aufnahme einer streuenden Fläche mit statistisch unregelmässigen Oberflächenstrukturen bzw. Volumenstreuzentren handelt, führt die Überlagerung zu dem gleichen Effekt wie bei einer Zunahme der Anzahl der Streuzentren.

Durch eine Wiederholung dieser Aufnahmetechnik mit N benachbarten Wellenlängen über einen Wellenlängenbereich von einigen Nanometern kann zusätzlich zu der oben beschriebenen Strukturierung hierdurch eine weitere Feinstrukturierung der Streucharakteristisch des Schirmes angegeben werden.

Bei der Wiedergabe mit einem Laserstrahl nur einer einzigen Wellenlänge entstehen mit der Verwendung des verbesserten erfindungemäßen feinstrukturierten Schirms nach beiden Verfahren größere Speckleelemente, die kombiniert mit einer Bewegung des Specklefeldes sich wesentlich besser im Auge ausmitteln als bei dem verwendeten Objektschirm.
Wird ein holografischer Schirm dieser Art mit einem Laserstrahl mit M Moden unterschiedlicher Wellenlänge beleuchtet, addieren sich N Specklefelder des feinstrukturierten Schirmes in ihrer Intensität. Da sie nicht miteinander interferenzfähig sind, ergibt sich dadurch die zusätzliche Reduktion der Speckles um einen Faktor √N.

Es versteht sich, daß auch die Kombinationen beider Verfahren und eine gemeinsame Herstellung z.B. durch die Belichtung des Hologramms mit mehreren Lasermoden N (λ(b)) bei jedem der eingestellten Orts- oder Winkelschritte N(O) durchgeführt werden kann. Bei der Wiedergabe kann zusätzlich die vorteilhafte Beleuchtung des Hologramms mit einem Laser mit mehreren Moden N(λ(w)), die nicht genau gleich der Aufnahmewellenlängen sein müßen, angewandt werden.

Die Herstellung eines erfindungsgemäßen holografischen Projektionsschirms als Reflexionshologramm oder als Transmissionshologramm ist oben beispielhaft beschrieben. Sie kann auf einer Vielzahl von verschiedenen Wegen und in unterschiedlichen Schritten erfolgen, die dem Fachmann bekannt und verständlich sind. Die Erfindung wird im folgenden anhand der in den Figuren teilweise schematisch dargestellten Ausführungsbeispielen näher beschrieben. Es zeigen:
Fig. 1 die Direktaufnahme eines Reflexionshologramm eines Projektionsschirmes nach dem bekannten Verfahren von Yu. N. Denisyuk und
Fig. 2. die Direktaufnahme eines Transmissionshologramms eines Projektionsschirmes nach dem Verfahren von Leith und Upatniek

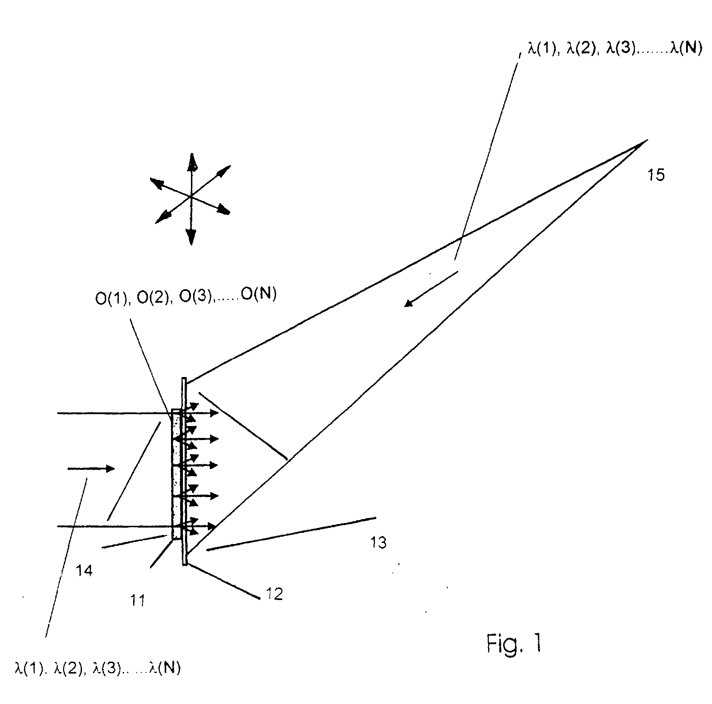

Fig. 1 zeigt die Aufnahme eines Reflexionshologramms eines Schirms in einem Schritt nach dem Verfahren von Denisyuk. Der Bildschirm z.B. eine stark rückstreuende Streuscheibe 11 wird nur mit einem sehr kleinen Abstand fast direkt auf das holografische Aufnahmematerial 12 gelegt, das Objektlicht 13 entsteht durch die Rückstreuung des Beleuchtungstrahles 14 in die Hologrammplatte, den Referenzstrahl 15 bildet die Quelle selbst. Schematisch angedeutet sind mit Pfeilen die erfindungsgemäßen Bewegungen des Schirmes in Schritten O(1),O(2),O(3),...O(N) und gemäß einer Weiterbildung der Erfindung die Änderungen der Wellenlängen der Belichtung in den Schritten λ(1), λ(2), λ(3),...λ(N).

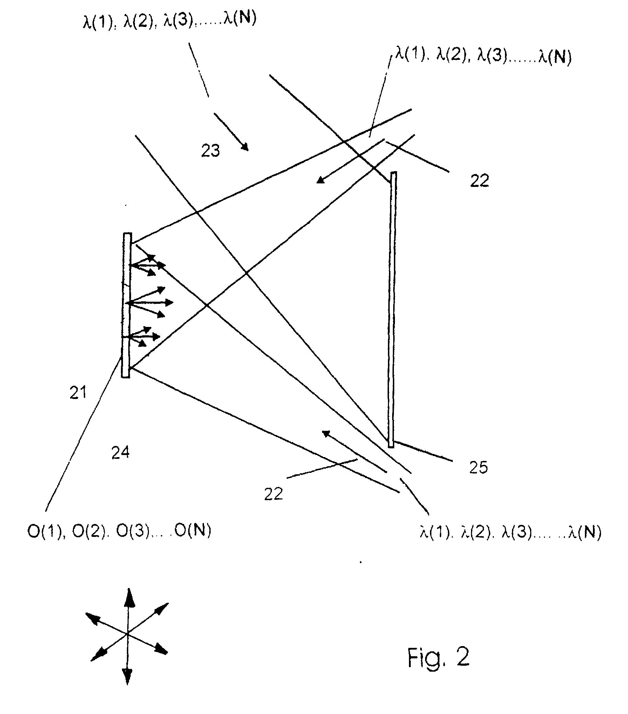

Fig. 2 zeigt die Aufnahme eines Transmissionshologramms eines Schirms in einem Schritt nach dem Verfahren von Leith und Upatniek. Der Bildschirm 21 wird hier beispielhaft von zwei Objektstrahlen 22 beleuchtet. Das Referenzlicht 23 tritt von der gleichen Seite auf die Hologrammplatte 25 wie das Objektlicht 24 als Streulicht. Es sind schematisch angedeutet die erfindungsgemäßen Versetzungen des Schirmes in Schritten O(1), O(2), O(3),...O(N) mit Pfeilen und gemäß einer Weiterbildung der Erfindung die Änderungen der Wellenlänge der Belichtung in den Schritten λ(1), λ(2), λ(3),....λ(N).

Es versteht sich daß die erfindungsgemäßen Verfahren auch bei der Herstellung von Bildschirmhologrammen in mehreren Schritten mit Hilfe von Masterhologrammmen angewandt werden können.

Weiterhin ist das bekannte Kopieren von einer Vielzahl von Kopien aus einem einzigen Masterhologrammbildschirms obengenannter Art möglich.

Als Aufnahmematerial kommen die bekannten Materalien wie Silberhalogenid-Material, Dichromat-Gelatine oder Photopolymer in Frage. Es sind grundsätzlich alle Materalien geeignet mit der entsprechenden Filmauflösung, Dynamik und Sensitivität um Mehrfachbilder der geschilderten Art zu speichern.

Für die Wiedergabe der drei Grundfarben bei der Projektion können die Aufnahmen in den drei Grundfarben des Schirmes in einer einzigen Aufhahmeschicht, in drei aufeinander oder nebeneinander geordnete Schichten einbelichtet werden.

Als Laserquelle für die Aufnahmen des Bildschirmes bei mehreren Wellenlängen hintereinander eignen sich vor allem Festkörperkristallaser wie z.B. Nd:YAG, die mit Hilfe von Frequenzkonversion in dem sichtbaren Wellenlängenbereich emittieren. Der Laser muß bei jeder Aufnahme nur auf nur einer Wellenlänge durch Modenselektion, z.B. mit Hilfe eines Etalons im Resonator emittieren. Die schrittweise Änderung der Wellenlänge kann dann z.B. durch schrittweise Verstimmung dieses Etalons durchgeführt werden. Mit diesem Laser sind Abstimmungen über etwa 3 nm möglich. Ein weiterer Bereich über einige zehn Nanometer kann z.B. mit dotierten Glaslasern oder optisch parametrischen Oszillatoren durchgestimmt werden.

Bei der Wiedergabe des Bildschirmhologramm brauchen nicht die gleichen Laser wie bei der Aufnahme verwendet werden, sondern außer den geeigneten Kristallasern z.B. Laser mit einer hohen Anzahl von longitudinalen Moden wie Faserlaser und Halbleiterlaser.

Die Erfindung ist nicht auf die beschriebenen Ausführungsbeispiele beschränkt.

## Patentansprüche

1. Verfahren zur Unterdrückung von Bildspeckles in einem holografischen Bildschirm (12, 25), der durch Aufnahme eines Hologramms mit einem Bildschirm (11, 21) als Objekt erzeugt wird, **dadurch gekennzeichnet, daß** die Belichtung des Bildschirmes (11, 21) während der Aufnahme des Hologramms in einzelnen, mehreren Schritten erfolgt, wobei in jedem Schritt eine Änderung von einem oder mehreren der Aufnahmeparameter Ort des Bildschirms", "Lagewinkel des Bildschirms", "Winkel des Beleuchtungsstrahl des Bildschirms" oder "Winkel des Referenzstrahles" durchgeführt wird.

2. Verfahren zur Unterdrückung von Bildspeckles in einem holografischen Bildschirm nach Anspruch 1, **dadurch gekennzeichnet, daß** auch die Wellenlänge des Aufnahmelasers verändert wird.

## Claims

1. Method for suppressing image speckles in a holographic display screen (12, 25) which is produced by recording a hologram with a display screen (11, 21) as the object, **characterised in that** the exposure of the display screen (11, 21) during the recording of the hologram takes place in several individual steps, one or more of the recording parameters "location of the display screen", "orientation angle of the display screen', "angle of the illumination beam of the display screen" or "angle of the reference beam" being changed in each step.

2. Method for suppressing image speckles in a holographic display screen according to claim 1, **characterised in that** the wavelength of the recording laser is also changed.

## Revendications

1. Procédé pour supprimer des taches d'image dans un écran (12,25) holographique, qui est généré par la prise de vue d'un hologramme avec un écran (11,21) comme objet, **caractérisé en ce que** l'exposition de l'écran (11,21) se fait pendant la prise de vue de l'hologramme en plusieurs étapes individuelles, une modification de l'un ou de plusieurs des paramètres de prise de vue "emplacement do l'écran", "angle de position de l'écran", "angle du faisceau d'éclairage de l'écran" ou "angle du faisceau de référence" étant effectuée lors de chaque étape.

2. Procédé pour supprimer des taches d'image dans un écran holographique selon la revendication 1, **caractérisé en ce que** la longueur d'onde du laser de prise de vue est également modifiée.
